# EUROPÄISCHE PATENTSCHRIFT

(11) **EP 3 527 385 B1**
(45) Veröffentlichungstag und Bekanntmachung des Hinweises auf die Patenterteilung: **24.08.2022**
(21) Anmeldenummer: 18157352.8
(22) Anmeldetag: 19.02.2018
(51) Int. Cl.: B41J 2/505, B41J 2/21

(54) **VERFAHREN ZUM WECHSELWEISEN BETREIBEN EINER TINTEN-DRUCKMASCHINE**
METHOD FOR OPERATING AN INK PRINTER IN ALTERNATING MODES
PROCÉDÉ DE FONCTIONNEMENT DE MANIÈRE ALTERNÉE D'UNE MACHINE À IMPRIMER À ENCRE

(43) Veröffentlichungstag der Anmeldung: 21.08.2019
(73) Patentinhaber: Heidelberger Druckmaschinen AG, 69115 Heidelberg (DE)
(72) Erfinder: Hachmann, Dr. Peter, 69469 Weinheim-Hohensachsen (DE)

(56) Entgegenhaltungen:
- JP-A- H0 226 753
- JP-A- H10 291 329
- JP-B2- 2 652 405
- US-A1- 2009 058 910

## Beschreibung

### Technisches Gebiet der Erfindung

Die Erfindung liegt auf dem technischen Gebiet der grafischen Industrie und dort insbesondere im Bereich des industriellen Tintendrucks (Inkjet) auf flache Substrate, d.h. des Auftragens von flüssiger Tinte auf bogen- oder bahnförmige Bedruckstoffe, bevorzugt aus Papier, Karton, Pappe oder Kunststoff.

### Stand der Technik

Eine unter dem Produktnamen "Primefire" bekannte und von der Heidelberger Druckmaschinen AG, Deutschland, entwickelte Tintendruckmaschine für die industrielle Produktion bedruckt Papierbogen mit wasserbasierten Inkjet-Tinten. Die Maschine umfasst sieben aufeinander folgende Druckstationen, welche die Farben CMYK (Cyan, Magenta, Gelb und Schwarz) und OGV (Orange, Grün, Violett) mit Druckköpfen auf das Papier übertragen. Die aufgetragenen Tinten werden unter Einsatz von IR-Trocknern getrocknet. Die Druckgeschwindigkeit dieser Maschine und ähnlicher Maschinen ist im Normalbetrieb durch die Taktung der Druckköpfe begrenzt.

Die EP 373 957 Aloffenbart eine Tintendruck-Vorrichtung, welche wahlweise mit vierfacher Geschwindigkeit druckt. Hierzu werden Druckköpfe anstatt mit bunter Tinte (CMY) mit schwarzer Tinte (K) versorgt.

Die JP 10-186768 A offenbart eine elektrofotografische Druckvorrichtung, welche ebenfalls wahlweise mit vierfacher Geschwindigkeit druckt. Hierzu werden Druckwerke für unbunte Farben (CMY) gegen Druckwerke für Schwarz (K) ausgetauscht.

JP 2 652405 B2, JP H10 291329 A, sowie US 2009/058910 A1 stellen relevanten Stand der Technik in Bezug auf die Erfindung gemäß Anspruch 1 dar.

Wünschenswert wäre eine Erhöhung der Druckgeschwindigkeit ohne aufwändige und zeitintensive Umrüst-Maßnahmen.

### Aufgabe

Es ist daher eine Aufgabe der Erfindung, eine Verbesserung gegenüber dem Stand der Technik zu schaffen, welche es insbesondere ermöglicht, die Druckgeschwindigkeit und damit die pro Zeiteinheit produzierten Druckerzeugnisse einer Maschine - wenigstens für ausgewählte Druckaufträge - auf einfache Weise, insbesondere ohne Umrüstmaßnahmen hinsichtlich der Tintenversorgung oder der Druckköpfe, zu erhöhen.

### Erfindungsgemäße Lösung

Diese Aufgabe wird erfindungsgemäß durch ein Verfahren nach Anspruch 1 gelöst. Vorteilhafte und daher bevorzugte Weiterbildungen der Erfindung ergeben sich aus den Unteransprüchen sowie aus der Beschreibung und den Zeichnungen.

Die Erfindung ermöglicht in vorteilhafter Weise, die Druckgeschwindigkeit und damit die pro Zeiteinheit produzierten Druckerzeugnisse - wenigstens für ausgewählte und im 2. Modus gedruckte Druckaufträge - auf einfache Weise, insbesondere ohne Umrüstmaßnahmen hinsichtlich der Tintenversorgung oder der Druckköpfe, zu erhöhen.

Die Erfindung ermöglicht es, einfarbige (wie z.B. schwarze, schwarze-weiße bzw. s/w oder graustufige) Druckaufträge mit höherer Transportgeschwindigkeit des Bedruckstoffs und somit auch mit höherer Druckgeschwindigkeit abzuarbeiten. Die Druckauflösung wird trotz dieser Erhöhung nicht herabgesetzt, d.h. die Druckqualität bleibt unverändert.

Mit anderen Worten: eine 7-Farben-Druckmaschine kann erfindungsgemäß im 1. Modus als solche betrieben und hierzu im Wechsel, d.h. im 2. Modus, als schnellere 1-Farben-Druckmaschine werden. Je nach anstehendem Druckauftrag (Farbdruck oder nicht) wird ein Wechsel der Modi durchgeführt. Als Beispiel sei genannt: Modus 1 mit 3000 7-farbigen Drucken pro Stunde und Modus 2 mit 12000 s/w-Drucken pro Stunde.

"Bedruckstoff" kann Folgendes umfassen: Papier, Karton, Pappe (auch Wellpappe) oder Kunststofffolie, jeweils bevorzugt als Bogen.

Erfindungsgemäß wird im 2. Modus ein Schwarzweiß- oder Graustufen-Druckauftrag gedruckt.

Erfindungsgemäß wird ein Anteil von schwarzen oder grauen Elementen des Druckbildes mit sechs verschiedenen bunten Tinten gedruckt.

Die Elemente können zusammengesetzte Druckpunkte des Druckbildes sein.

Erfindungsgemäß ist der Druckauftrag n-farbig wobei n=7 ist. Eine bevorzugte Weiterbildung der Erfindung kann sich dadurch auszeichnen, dass die folgenden Tinten K CMY OGV verdruckt werden: Schwarz bzw. K, Cyan bzw. C, Magenta bzw. M, Gelb bzw. Y, Orange bzw. O, Grün bzw. G und Violett bzw. V.

Schwarz oder Grau/Graustufen kann bevorzugt wie folgt zusammengesetzt werden: OC, GM oder VY.

Anstelle von OGV kann auch eine andere Kombination von drei Farben verwendet werden: Bevorzugt solche Farben F1, F2 und F3, welche mit CMY zusammen jeweils Schwarz oder Grau bzw. Graustufen besser annähern als OGV: F1C, F2M F3Y.

Eine bevorzugte Weiterbildung der Erfindung kann sich dadurch auszeichnen, dass im wesentlichen Dreiviertel der schwarzen oder grauen/graustufigen Elemente des Druckbildes mit den Tinten OC, GM oder VY (oder alternativ: F1C, F2M F3Y) gedruckt werden.

Eine bevorzugte Weiterbildung der Erfindung kann sich dadurch auszeichnen, dass die zweite Transportgeschwindigkeit im Wesentlichen das Vierfache der ersten Transportgeschwindigkeit ist.

Eine nicht erfindungsgemäße Weiterbildung der Erfindung kann sich dadurch auszeichnen, dass n=4 ist, wobei die folgenden Tinten K CMY verdruckt werden: Schwarz bzw. K, Cyan bzw. C, Magenta bzw. M und Gelb bzw. Y.

In dem nicht erfindungsgemäßen Fall kann Schwarz oder Grau/ Graustufen bevorzugt wie folgt zusammengesetzt werden: CMY.

In dem nicht erfindungsgemäßen Fall kann im Wesentlichen die Hälfte der schwarzen oder grauen/graustufigen Elemente des Druckbildes mit den Tinten CMY gedruckt werden.

In dem nicht erfindungsgemäßen Fall kann die zweite Transportgeschwindigkeit im Wesentlichen das Doppelte der ersten Transportgeschwindigkeit sein.

### Ausführungsbeispiele zur Erfindung

Die Erfindung und deren bevorzugte Weiterbildungen werden nachfolgend unter Bezug auf die Zeichnungen anhand eines bevorzugten Ausführungsbeispiels näher beschrieben. Einander entsprechende Merkmale sind in den Figuren mit denselben Bezugszeichen versehen.

Die Zeichnungen zeigen:
- Figur 1: Eine Maschine bei der Durchführung eines erfindungsgemäßen Verfahrens;
- Figur 2a: ein Ausschnitt eines siebenfarbigen Druckbildes gedruckt im 1. Modus;
- Figur 2b: ein Ausschnitt eines nicht erfindungsgemäßen vierfarbigen Druckbildes gedruckt im 1. Modus;
- Figur 3a: ein Ausschnitt eines siebenfarbigen Druckbildes gedruckt im 2. Modus;
- Figur 3b: ein Ausschnitt eines siebenfarbigen Druckbildes gedruckt im 2. Modus;
- Figur 3c: ein Ausschnitt eines siebenfarbigen Druckbildes gedruckt im 2. Modus; und
- Figur 4: ein Ausschnitt eines nicht erfindungsgemäßen vierfarbigen Druckbildes gedruckt im 2. Modus.

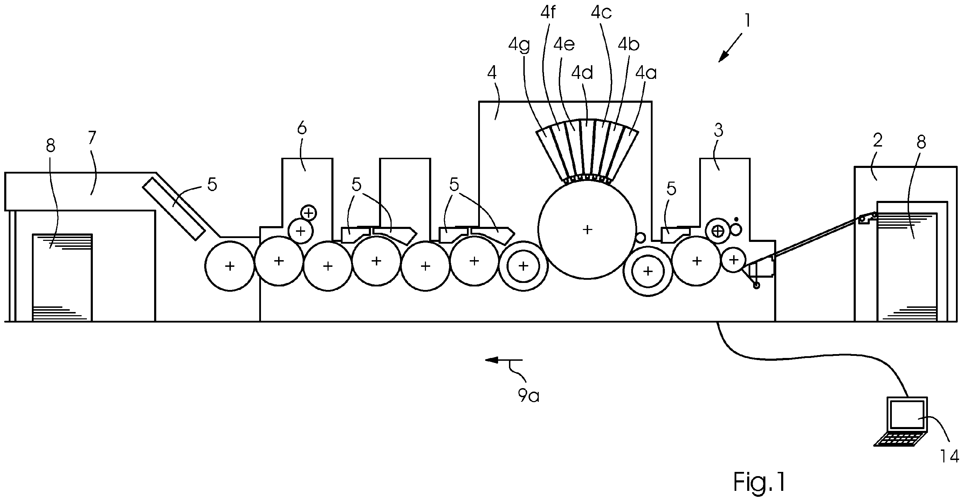

Die Figur 1 zeigt eine bogenverarbeitende Tintendruckmaschine 1 für die industrielle Produktion ein- oder mehrfarbiger Druckprodukte im Inkjet-Druckverfahren bei der Durchführung eines erfindungsgemäßen Verfahrens. Die Produktion erfolgt bei vorgegebener Druckauflösung, z.B. 1.200 x 1.200 dpi.

Die Maschine 1 umfasst einen Stapel-Anleger 2, ein so genanntes Precoat- oder Vorbeschichtungswerk 3 für den Auftrag einer Vorbeschichtung, ein Inkjet-Druckwerk 4 für das bildgemäße Bedrucken der Bogen, einen oder mehrere Trockner 5, ein Lackwcrk 6 und einen Stapel-Ausleger 7. Die Bogen 8 werden mit Zylindern durch die Maschine transportiert und bestehen bevorzugt aus Papier, alternativ aus Karton.

Das Druckwerk 4 umfasst sieben in Bogen-Transportrichtung aufeinander folgend angeordnete Druckstationen 4a bis 4f zum Übertragen von Tintentropfen, bevorzugt der Prozess-Farben K CMY OGV (Schwarz, Cyan, Magenta, Gelb, Orange, Grün und Violett). Jede Station umfasst eine im Wesentlichen quer zur Transportrichtung ausgerichtete Anordnung von im Druckbetrieb unbewegten Druckköpfen mit je einer Vielzahl an einzeln ansteuerbaren Druckdüsen zum Erzeugen der Tropfen ("Drop on demand" bzw. DOD).

Die Stationen 4a bis 4f ermöglichen das seitenbreite Bedrucken einer Bogenseite im so genannten single-pass-Betrieb, d.h. die Bogenseiten gelangen nur einmal in den Wirkbereich der Stationen. Die Tinten sind wasserbasierte Tinten, deren Tropfen mit der Vorbeschichtung reagieren um Druckpunkte hoher Punktschärfe zu bilden, und enthalten als Farbmittel Pigmente.

Die Trockner 5 sind bevorzugt thermische Trockner mit Infrarot-Strahlern, bevorzugt LED-Strahlern, und dienen dem Verdampfen des Wassers aus der verdruckten Tinte, dem Precoat, dem Lack bzw. aus dem Bedruckstoff.

Die Bogen 8 werden in einer Richtung 9a mit einer Transportgeschwindigkeit durch die Maschine 1 geführt und dabei bedruckt.

Die Maschine 1 umfasst auch eine Maschinensteuerung 14 mit einem Rechner und einem auf dem Rechner laufenden Steuerprogramm, wobei der Rechner Teil eines nicht dargestellten Bedienpults sein kann. Ebenfalls nicht dargestellt sind eine Einrichtung zur Versorgung der Druckstationen mit Tinten und eine Einrichtung zur Reinigung der Druckköpfe.

Die in Figur 1 dargestellte Maschine 1 kann erfindungsgemäß wechselweise im 1. Modus und im 2. Modus betreiben werden. Der Wechsel kann von der Maschinensteuerung 14 ausgeführt werden.

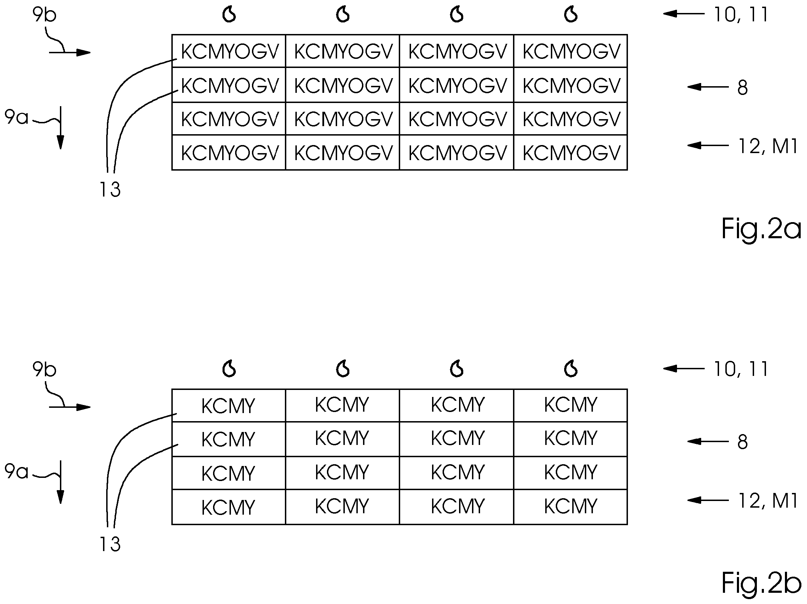

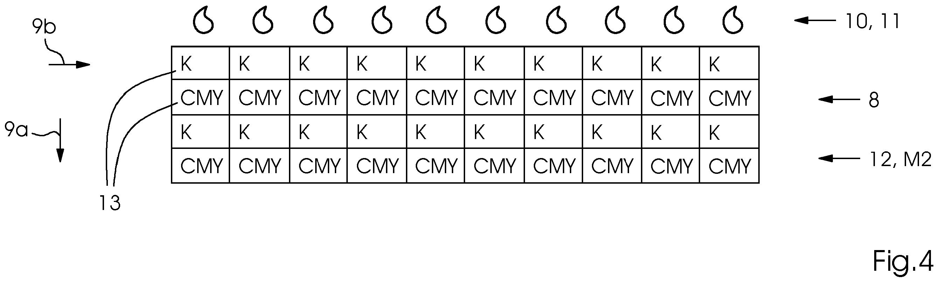

Figur 2a zeigt ein Ausführungsbeispiel der Erfindung, in diesem Fall einen erfindungsgemäß gedruckten Ausschnitt von zwei mal vier Elementen 13 eines Druckbildes 12. Das Druckbild wird durch Aufbringen von Tinte 10 in Form von Tropfen 11 bestimmter Größe auf den Bedruckstoff 8, in diesem Fall ein Papierbogen, erzeugt. Entsprechendes gilt für die Figuren 2b, 3a bis 3c und 4, wobei die Figuren 2b und 4 nicht erfindungsgemäße Ausführungsbeispiele darstellen.

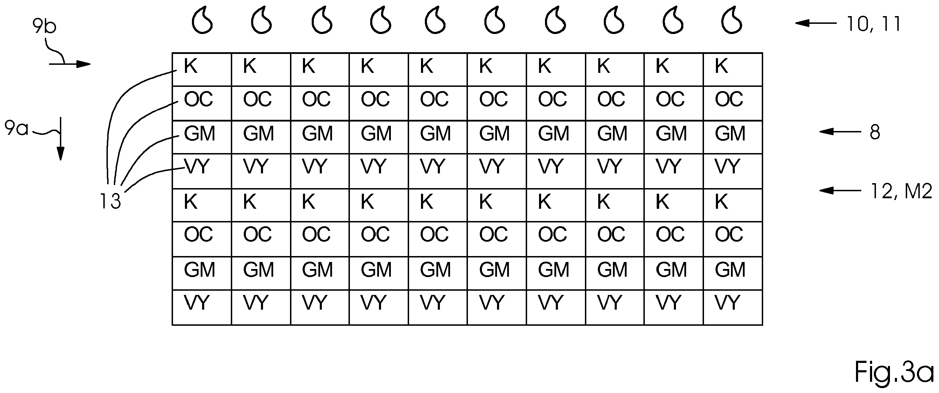

Die Elemente 13 in den Zeilen des gezeigten Ausschnitts (also in lateraler Richtung 9b) werden von benachbarten Düsen eines Druckkopfs (oder mehrerer, in Transportrichtung 9a aufeinander folgender Druckköpfe für die verschiedenen Farben) erzeugt. Jedes Element besteht aus einer oder mehreren Farben, d. h. aus entsprechend farbigen Tintentropfen 11, welche entsprechend farbige Druckpunkte auf dem Bogen 8 erzeugen. Die Druckpunkte können dabei nebeneinander liegen oder einander teilweise oder komplett überlagern. Die Elemente 13 in den Spalten des gezeigten Ausschnitts (also in Transport-Richtung 9a) werden der Taktung des Druckkopfs oder der mehreren Druckköpfe entsprechend erzeugt. Entsprechendes gilt wiederum auch für die Figuren 2a, 3a bis 3c in 4.

Figur 2a zeigt einen Ausschnitt eines im ersten Modus M1 des erfindungsgemäßen Verfahrens erzeugten Druckbilds 12: Jedes Element (bzw. jeder Rasterpunkt) kann dabei aus mehreren Farben bzw. entsprechenden Tinten 10 zusammengesetzt sein, im gezeigten Beispiel sind es die sieben Farben K CMY OGV. Es wird also erfindungsgemäß ein Siebenfarbendruck hergestellt. Die dabei erreichte (durchschnittliche) Transportgeschwindigkeit des Bedruckstoffs soll im Folgenden als Normalgeschwindigkeit bezeichnet werden. Gedruckt wird zum Beispiel auf der in Figur 1 gezeigten Maschine 1.

Figur 2b zeigt ähnlich wie Figur 2a einen im ersten Modus M1 bedruckten Ausschnitt eines Farbdrucks, jedoch sind es in diesem nicht erfindungsgemäßen

Beispiel nur die vier Farben K CMY. Gedruckt wird zum Beispiel auf einer Maschine 1 entsprechend Figur 1, jedoch mit nur vier Druckstationen 4a bis 4d und bei einer für diesen 4-Farb-Maschinentyp erreichbaren Normalgeschwindigkeit.

Die folgenden Figuren 3a bis 3c zeigen jeweils Ausschnitte von Druckbildern 12, die im zweiten Modus M2 des erfindungsgemäßen Verfahrens gedruckt wurden. Die Druckbilder 12 der Figuren 3a bis 3c werden entsprechend dem Druckbild in Figur 2a auf einer Siebenfarben-Druckmaschine gedruckt, das Druckbild der Figur 4 dagegen nicht erfindungsgemäß entsprechend dem

Druckbild in Figur 2b auf einer Vierfarben-Druckmaschine.

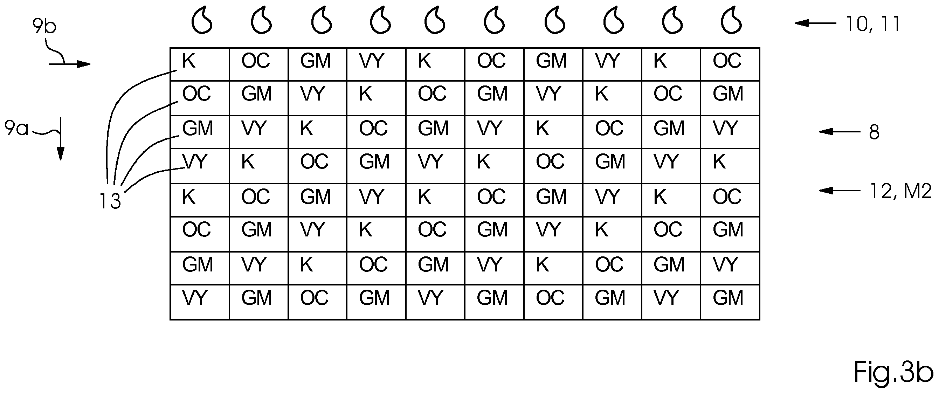

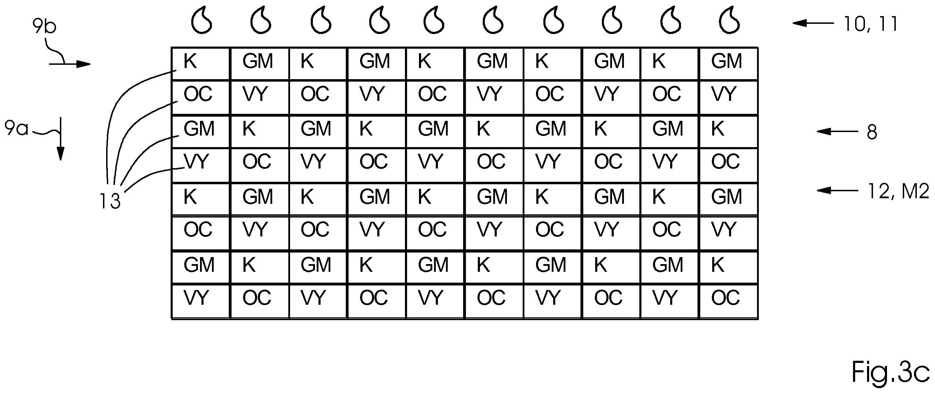

In Figur 3a ist erkennbar, dass die Transportgeschwindigkeit im Vergleich zur Ausführungsform der Figur 2a bzw. zur dortigen Normalgeschwindigkeit vervierfacht wurde, denn Zeilen mit gleichen Druckfarben, zum Beispiel Schwarz/K, wiederholen sich alle vier Zeilen, d. h. dazwischen werden drei weitere Zeilen gedruckt. Pro Zeiteinheit oder entsprechend der Taktung der Druckköpfe wird somit eine viermal längere Strecke des Bogens bedruckt. Hierzu wird der Bogen mit im Wesentlichen vierfacher Transportgeschwindigkeit transportiert. Entsprechendes gilt für die in den Figuren 3b und 3c gezeigten Ausführungsformen.

Das jeweilige farbreduzierte Druckbild 12 in den Figuren 3b und 3c ist ein Schwarz oder Schwarz-Weiß oder Graustufen-Druckbild. Die Elemente 13 des jeweiligen Druckbildes 12 sind entweder Schwarz/K oder zusammengesetzt aus OC, GM oder YV. Letztere drei Kombination aus Komplementärfarben ergeben im Idealfall auch Schwarz oder in real einen Grauton. Es ist im Rahmen der Erfindung auch möglich und sogar von Vorteil, statt den Standard-Farben OGV solche spezielle angepassten Farben F1, F2 und F3 zu verwenden, welche in den Kombinationen F1 und C (F1C), F2 und M (F2M) sowie F3 und Y (F3Y) der Farbe Schwarz oder den idealen Graustufen möglichst nahe kommen und möglichst wenig Farbstich aufweisen. Statt Orange könnte z.B. eher ein Rot verwendet werden.

Ein Vergleich der Figuren 3a bis 3c lässt erkennen, dass das Druckbild 12 zwar aus gleichen Elementen 13 aufgebaut ist, dass diese jedoch in den Ausführungsformen verschieden angeordnet sind, also unterschiedliche "Muster" bilden. Figur 3a lässt erkennen, dass in den Zeilen gleiche Elemente 13 angeordnet sind, also die Elemente K, OC, GM und VY. Solche "Quer-Linien" könnten mit dem Auge wahrnehmbar und daher störend sein. Figur 3b lässt entsprechend "Diagonal-Linien" erkennen, welche auch wahrnehmbar sein könnten. In Figur 3c ist schließlich erkennbar, dass die Elemente 13 derart abwechselnd angeordnet sind, dass keine durchgehenden "Linien" wahrgenommen werden können, weshalb diese letzte Ausführungsform die bevorzugte ist. Alternativ kann auch eine statistische Anordnung der Zellen gewählt werden.

Die bevorzugte Ausführungsform in Figur 3c lässt erkennen, dass die schwarzen Elemente 13 mit den zwischen ihnen zu liegen kommenden bunt aufgebauten Zellen "im Mittel", z. B. in einem Feld von 4 mal 8 Elementen (4 lateral, 8 längs zur Transportrichtung), einen Grauwert ergeben. Um den entsprechend dem druckenden Druckbild 12 am jeweiligen Ort des Druckbildes zu erreichenden Grauwert tatsächlich zu erhalten, wird in bekannter Art und Weise am betreffenden Ort die Rasterung und/oder die Tropfengröße angepasst.

Beim nicht erfindungsgemäßen Beispiel ist in Figur 4 ist erkennbar, dass die Transportgeschwindigkeit im Vergleich zur Ausführungsform der Figur 2b bzw. zur dortigen Normalgeschwindigkeit verdoppelt wurde: Eine Zeile wird mit Schwarz K gedruckt, die nächste Zeile mit CMY und so weiter. Auch das in diesem nicht erfindungsgemäßen Beispiel erzeugte Druckbild 12 ist farbreduziert, insbesondere Schwarz oder Schwarz-Weiß oder ein Graustufen-Druckbild.

Die Tropfengrößen 11 sind in den Ausführungsformen der Figuren 3a bis 3c bzw. im nicht erfindungsgemäßen Beispiel gemäß Figur 4 anders, insbesondere größer gewählt als in der Ausführungsform der Figur 2a bzw. dem nicht erfindungsgemäßen Beispiel entsprechend Figur 2b, bzw. im zweiten Modus M2 anders als im ersten Modus M1. Da in dem nicht erfindungsgemäßen Beispiel entsprechend Figur 4 nur 3 Farben zu Schwarz oder Grau gemischt werden, kann die bei kleiner Tropfengröße erreichbare Farbdichte zu gering sein, weshalb es sich in diesem Fall anbieten kann, größere Tropfen zu drucken.

### Bezugszeichenliste

- 1: Tinten-Druckmaschine
- 2: Anleger
- 3: Vorbeschichtungswerk
- 4: Druckwerk
- 4a-4f: Druckstationen für K CMY OGV
- 5: Trockner
- 6: Lackwerk
- 7: Ausleger
- 8: Bogen aus Bedruckstoff
- 9a: Transport-Richtung/Transportgeschwindigkeit
- 9b: laterale Richtung
- 10: Tinten
- 11: Tintentropfen bzw. deren Größe
- 12: Druckbild
- 13: Elemente des Druckbildes
- 14: Maschinensteuerung

- M1: erster Modus
- M2: zweiter Modus

## Patentansprüche

1. Verfahren zum wechselweisen Betreiben einer industriellen Tinten-Druckmaschine (1), d.h. einer Tinten-Druckmaschine (1) mit sieben Druckstationen (4a bis 4f) mit jeweils einer im Wesentlichen quer zu einer Transportrichtung eines Bedruckstoffs (8) ausgerichteten Anordnung von im Druckbetrieb unbewegten Druckköpfen, welche den mit Transportgeschwindigkeit (9a) geförderten Bedruckstoff (8) seitenbreit im single-pass-Betrieb mit sieben Tinten (10) einem Druckbild (12) entsprechend bedruckt, wobei zwischen den folgenden beiden Modi (M1, M2) gewechselt wird:
1. Modus (M1): Drucken eines siebenfarbigen ersten Druckauftrages bei einer ersten Transportgeschwindigkeit (9a) und bei einer Druckauflösung mit 7 Tinten (10), d.h. mit schwarzer Tinte und sechs verschiedenen bunten Tinten; und
2. Modus (M2): Drucken eines farbreduzierten zweiten Druckauftrages, d.h. eines Schwarzweiß- oder Graustufen-Druckauftrags, bei einer gegenüber der ersten erhöhten zweiten Transportgeschwindigkeit (9a) und bei unveränderter Druckauflösung mit den 7 Tinten (10), wobei ein Anteil von schwarzen oder grauen Elementen des Druckbildes mit den sechs verschiedenen bunten Tinten (10) gedruckt wird.

2. Verfahren nach Anspruch 1,
**dadurch gekennzeichnet,**
**dass** i) die folgenden Tinten (10) K CMY OGV verdruckt werden: Schwarz bzw. K, Cyan bzw. C, Magenta bzw. M und Gelb bzw. Y sowie Orange bzw. O, Grün bzw. G und Violett bzw. V; oder dass ii) die folgenden Tinten (10) K CMY F1 F2 F3 verdruckt werden: Schwarz bzw. K, Cyan bzw. C, Magenta bzw. M und Gelb bzw. Y sowie F1, F2 und F3, welche mit CMY zusammen, d.h. in den Kombinationen F1C, F2M und F3Y, jeweils Schwarz oder Grau bzw. Graustufen besser annähern als OGV.

3. Verfahren nach Anspruch 2,
**dadurch gekennzeichnet,**
**dass** Dreiviertel der schwarzen oder grauen Elemente des Druckbildes i) mit den Tinten (10) OC, GM oder VY gedruckt werden; oder ii) mit den Tinten (10) F1C, F2M und F3Y gedruckt werden.

4. Verfahren nach Anspruch 3,
**dadurch gekennzeichnet,**
**dass** die zweite Transportgeschwindigkeit (9a) im Wesentlichen das Vierfache der ersten Transportgeschwindigkeit (9a) ist.

## Claims

1. Method for alternately operating an industrial ink printing machine (1), i.e. an ink printing machine (1) with seven printing stations (4a to 4f), each including an assembly of printing heads disposed in a direction essentially transverse to a conveying direction of a printing material and stationary during the printing operation and applying seven inks (10) to a printing material (8), which is conveyed at a conveying speed (9a), in a single-pass operation and in accordance with a page-wide print image (12), alternating between the following modes (M1, M2):
1st mode: printing a seven-colour first print job at a first conveying speed (9a) and at a print resolution using seven inks (10), i.e. black ink and six different chromatic inks; and
2nd mode: printing a reduced-colour second print job, i.e. a black-and-white or grey-scale print job, at a second conveying speed (9a) greater than the first conveying speed and at an unchanged print resolution using the seven inks (10), printing a proportion of black or
grey elements of the print image by using the six different chromatic inks (10).

2. Method according to claim 1,
**characterized**
**in that** i) the following inks (10) K CMY OGV are applied: black/K, cyan/C, magenta/M, and yellow/Y as well as orange/O, green/G, and violet/V, or in that ii) the following inks (10) K CMY F1 F2 F3 are applied: black/K, cyan/C, magenta/M, and yellow/Y, as well as F1, F2, and F3, which, together with CMY, i.e. in combinations F1C, F2M, and F3Y, are better approximations of black or grey than OGV.

3. Method according to claim 2,
**characterized**
**in that** three quarters of the black or grey elements of the print image are printed i) using inks (10) OC, GM, or VY; or ii) using inks (10) F1C, F2M, and F3Y.

4. Method according to claim 3,
**characterized**
**in that** second conveying speed (9a) essentially equals four times the first conveying speed (9a).

## Revendications

1. Procédé pour le fonctionnement alterné d'une machine à imprimer à encre industrielle (1), à savoir une machine à imprimer à encre (1) avec sept postes d'impression (4a à 4f) comportant chacun un dispositif, orienté essentiellement perpendiculairement à une direction de transport d'un support d'impression (8), de têtes d'impression immobiles en mode d'impression, qui imprime le support d'impression (8) transporté à la vitesse de transport (9a) sur toute la largeur des pages en mode singlepass avec sept encres (10) conformément à une image d'impression (12), pour lequel il y a alternance entre les deux modes suivants (M1, M2) :
1. Mode (M1) : impression d'un premier travail d'impression en sept couleurs à une première vitesse de transport (9a) et à une résolution d'impression avec sept encres (10), à savoir avec une encre noire et six encres de couleur différentes ; et
2. Mode (M2) : impression d'un deuxième travail d'impression en couleurs réduites, à savoir un travail d'impression en noir et blanc ou en niveaux de gris, à une deuxième vitesse de transport (9a) augmentée par rapport à la première et avec une résolution d'impression inchangée, avec les 7 encres (10), une partie des éléments noirs ou gris de l'image d'impression étant imprimée avec les six différentes encres de couleur (10).

2. Procédé selon la revendication 1,
**caractérisé en ce**
**que** i) l'impression s'effectue avec les encres suivantes (10) K CMY OGV : Noir ou K, Cyan ou C, Magenta ou M et Jaune ou Y ainsi qu'Orange ou O, Vert ou G et Violet ou V ; ou que ii) l'impression s'effectue avec les encres suivantes (10) K CMY F1 F2 F3 : Noir ou K, Cyan ou C, Magenta ou M et Jaune ou Y ainsi que F1, F2 et F3, qui avec CMY, à savoir dans les combinaisons F1C, F2M et F3Y, approchent respectivement mieux le noir ou le gris ou les niveaux de gris que OGV.

3. Procédé selon la revendication 2,
**caractérisé en ce**
**que** les trois quarts des éléments noirs ou gris de l'image d'impression i) sont imprimés avec les encres (10) OC, GM ou VY ; ou ii) sont imprimés avec les encres (10) F1C, F2M et F3 Y.

4. Procédé selon la revendication 3,
**caractérisé en ce**
**que** la deuxième vitesse de transport (9a) représente essentiellement quatre fois la première vitesse de transport (9a).
